# EUROPEAN PATENT SPECIFICATION

(11) **EP 1 971 204 B1**
(45) Date of publication and mention of the grant of the patent: **25.05.2016**
(21) Application number: 06824295.7
(22) Date of filing: 07.12.2006
(51) Int. Cl.: A01N 25/12, A01N 25/26, A01N 57/16, A01N 51/00, A01N 47/38, A01N 47/22, A01N 47/02, A01C 1/06, C05G 3/02, A01P 3/00, A01P 7/00

(54) **PROTECTION OF GERMINATING SEED AND PILLS CONTAINING PESTICIDES**
SCHUTZ VON AUFLAUFENDEM SAATGUT UND PESTIZIDHALTIGE PILLEN
PROTECTION DE GRAINES GERMEES ET PASTILLES CONTENANT DES PESTICIDES

(30) Priority: 07.12.2005 US 295485
(43) Date of publication of application: 24.09.2008
(73) Proprietor: INCOTEC Europe B.V., 1601 BL Enkhuizen (NL)
(72) Inventor: LEGRO, Robert Jean, NL-1602 DN Enkhuizen (NL); HONKOOP, Sijbert, NL-2676 LC Maasdijk (NL)
(74) Representative: V.O.
(86) International application number: PCT/NL2006/000619
(87) International publication number: WO 2007/067042

(56) References cited:
- EP-A1- 0 543 438
- WO-A-01/13722
- WO-A-95/16349
- WO-A-02/078421
- WO-A-03/045877
- WO-A1-02/080675
- WO-A2-2005/120226
- CA-A1- 1 143 651
- DATABASE WPI Week 200170 Derwent Publications Ltd., London, GB; AN 2001-609308 XP002422929 & JP 2001 192304 A (CHISSO CORP) 17 July 2001 (2001-07-17)
- KATARIA H R ET AL: "INTERACTIONS OF FUNGICIDE AND INSECTICIDE COMBINATIONS AGAINST RHIZOCTONIA DAMPING-OFF AND ROOT ROT IN CANOLA" ANNALS OF APPLIED BIOLOGY, ASSOCIATION OF APPLIED BIOLOGISTS, WELLESBOURNE, GB, vol. 123, no. 2, 1993, pages 233-246, XP009079785 ISSN: 0003-4746

## Description

The present invention relates to a method for the protection of germinating seed coated with pesticide, and more in particular to an active ingredient-containing pellet in combination with a seed-containing pellet.

Such a method is known in the field. Usually pesticides, such as, for example insecticides and fungicides are incorporated in the coatings of pelleted seeds.

The problem with many pesticides is that they can be rather phytotoxic for the germinating seed to which the pesticide is applied. One reason for this is the high dosage in which the pesticide often must be applied to afford adequate protection against the pest to be fought. The negative effect may vary from retarded germination to abnormal seedlings, or even to a total lack of germination of part of the seeds. Of course, the degree in which germination may be affected so negatively depends also on the type of pesticide, the seed species, the sensitivity of the variety, the vigour of the seed batch, and the environmental conditions during germination and emergence of the treated seed.

By covering the seed with a coating, the negative effect of the pesticide on the seed can be limited to some extend. For instance, the seed may be coated (pelleted) with a relatively thick layer of inert material on which the pesticide is applied in such a way that the pesticide is not directly in contact with the seed.

However, a further disadvantage of this method of pelleting is that at high dosages such a coating affords insufficient protection against the possible phytotoxic effect of the pesticide. Furthermore, due to the high dosages the coating's physiochemical properties may be changed significantly, indirectly producing a negative effect due to a change in the oxygen/water balance in the coating.

WO-A-01/13722 describes a method for the protection of germinating seed coated with pesticide, wherein the seed-containing pellets and pesticide-containing pellets are sown as individual pellets at the same time.

WQ-A-02/0788421 discloses a method for coating seeds and/or embryoids with a polymeric envelope, wherein an essential anydrous polymerization reaction, is used. This results in seeds which do not have to be dried anymore and which can have improved germination and subsequent growth of the seedlings.

WO-A-02/080675 describes a method of controlling the release of agricultural active ingredients from treated plant seeds. An emulsion of a polymer and an agricultural active ingredient in a liquid in which both the agricultural active ingredient and the polymer are badly soluble, is applied, as a film on a seed. The film is cured to form, a water insoluble polymer coating. Then, active ingredient is controllably released.

EP-A-0543 438 describes pellets with a core of inert carrier material and a shell of genetic material, which shell can comprise an insecticide and/or a fungicide.

WO-A-03/045877 is directed to a micro-granular composition that can contain fertilizer and pesticide and are suitable for local application on crops.

WO-A-95/16349 discloses a fungicide agent, which contains a a slow-release formulation. The agent can be in the form of granules which may be sown, together with the plant seed.

CA-A-1 148 651 concerns combatting pests ov *Brassica* by appying an amount of bendiocarb-containing granules on the spot where the crop grows or is to be grown.

JP-A-2001 192 804 is directed to a growth medium with different layers. One of the layers is a seed layer that consists of a granule which can long-lastingly release an agricultural active ingredient.

WO 2005/120226 A2, which is relevant under Art. 54 (3) EPC, discloses a method of protecting germinating seed treated with a pesticide by sowing the seed together with a pesticide containing particle, wherein seed and particle together contain a total effective dose of the pesticide.

The present invention has the aim to avoid these disadvantages. This aim is achieved according to the present invention by the combination of active ingredient-containing pellet and seed-containing pellet as defined in claim 1. defined in claim 1.

Because the seed germ and the pesticide are incorporated in separate pellets, the seed in the seed-containing pellet can germinate and grow before it comes into contact with the pesticide which will be released from another pellet. Thus during the most vulnerable stage, the moment of germination, there is no contact yet with the pesticide.

It is noted that in the present invention the term pesticide-containing pellets also includes film-coated inert cores (see example 3).

According to a preferred embodiment of the invention, the pesticide-containing pellets have substantially the same size and shape as the seed-containing pellets.

Since the pesticide-containing pellets are substantially the same size as the seed-containing pellets, it is thus possible with precision sowing machinery to sow one pesticide-containing pellet per plant. Thus in a simple way both sub- and overdose can be effectively avoided.

According to a preferred embodiment of the invention the pesticide-containing pellets comprise a pesticide dosage which is sufficient for one seed germ.

Thus unnecessary waste of the expensive pesticide is avoided, and furthermore there is the least possible impact on the environment.

According to another preferred aspect, the pesticide-containing pellets contain a filler material.

By supplementing the exact dosage of pesticide with an appropriate amount of filler material, the size of the pesticide-containing pellet can be adapted to that of the seed-containing pellet.

According to an advantageous embodiment, both pesticide- and seed-containing pellets have a substantially uniform diameter ranging from of 0.5-5 mm.

The invention also relates to a pesticide-containing pellet used in combination with a seed-containing pellet.

By sowing pellets having the same shape and size, an optimal sowability with precision sowing machines can be achieved.

According to the invention, the pesticide in the pesticide-containing pellet may be, for example, acaricides or miticides, bactericides, fungicides (e.g. Apron, Maxim, Thiram), herbicides, insecticides (e.g. Rovral® (Bayer), Gigant®, Tracer® (DowElanco), Gaucho®, Poncho®, Calypso® (Bayer), Cruiser® (Syngenta) Oncol® (Otsuka Chemical), Mundial® (BASF), Birlane® (Cyanamid) etc.), molluscicides, nematicides Avicta® (Syngenta), bird repellents, ant repellents and rodenticides, but also growth hormones, nutrients (micro and/or macro), germination stimulants, micro organisms, pheromones, biological preparations, plant metabolic regulator, plant strengthened, gene inducers etc.

All types of filler material commonly used in the seed coating business can be used such as, for example, clay, perlite, diatomaceous earth, quartz, cellulose, vermiculite, mica, etc.

Naturally the pesticide-containing pellet may be produced in any desired shape and size depending on the seed-containing pellets to be sown at the same time.

The core of the pesticide-containing pellet may be inert, for example, a glass-bead, perlite, plastic, pumice or any other suitable material. If desired however, it is also possible to use killed, non-germinating seed (for example killed by heat treatment, gamma rays, microwave etc.) or other biodegradable organic material which has no detrimental effect on the seed germination.

Optionally according to the invention, a substance may be added to the pesticide-containing pill to regulate the release of the pesticide.

The present invention will now be further elucidated with reference to a number of exemplary embodiments. Figures 1-4 show alternative embodiments of a pesticide-containing pellet.
Figure 1 shows a pesticide-containing pellet 1 with a core 2, which core is surrounded by the active material 3.
Figure 2 shows a pesticide-containing pellet 1 with a core 2, which core 2 is surrounded by a filler 4 provided with a coating of active material 3.
Figure 3 shows a pesticide-containing pellet 1 with a core, core 2 is surrounded by an active material 3 provided with a coating of filler 4.
Figure 4 shows a pesticide-containing pellet 1 with a core 2, which core is covered successively with a layer of filler 4, a layer of active material 3 and a coating of filler 4.
   Naturally the pesticide-containing pellets may have any shape as long as this shape substantially resembles the shape of the seed-containing pellets.
Figure 5 shows a graph which illustrates the release of active component from a (viable) seed-containing pellet according to the prior art (solid line) in comparison with a pellet used in the present invention (dotted line).
Figure 6 shows germinated lettuce seedlings from seed-containing pellets sown separately but simultaneously with pesticide-containing pellets (present invention).
Figure 7 shows germinated lettuce seedlings from pellets containing both seed and pesticide (prior art).

In yet another embodiment, the invention uses an active ingredient-containing pellet comprising an inert core and at least one active ingredient, wherein said active ingredient is advantageous for a plant seed or a plant. Such an active ingredient-containing pellet is, as will be explained in more detail later, combined in the field or in a greenhouse with a seed-containing pellet or a true seed. The active-ingredient-containing pellet is also combined with a seedling or a (more mature) plant or with a (potato) tuber or a cutting or a rootstock or a flower bulb. In case of pelleted of true seed, said seed maybe primed or non-primed.

The terms pesticide-containing pellet, active-ingredient-containing pellet, dummy pellet or dummy pill and smart pellet or smart pill will be used interchangeable herein.

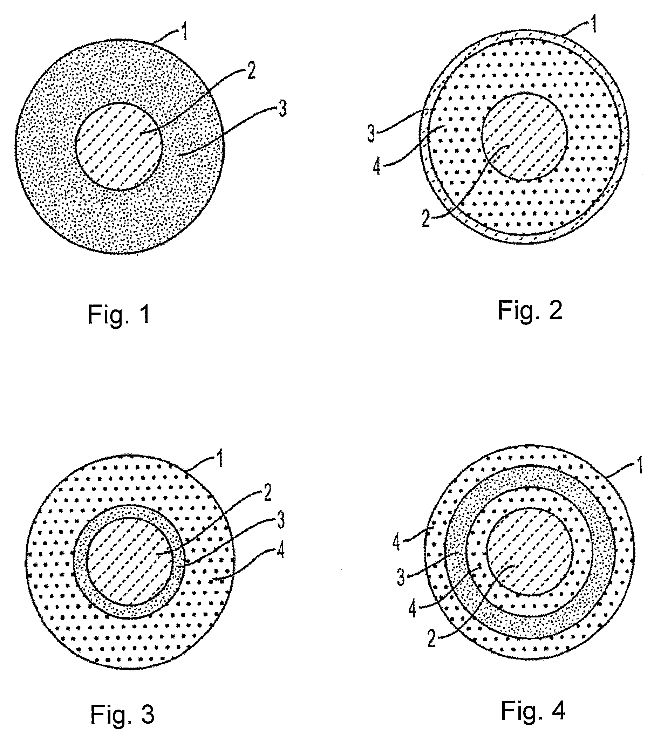

An inert core is typically composed of a material that does not influence (in any way) the (germinating) seed, seedling, plant or any plant part (such as a tuber). Such an inert core has preferably one or more of the following features: the inert core is not a source of nutrients for micro-organisms in general and more specific not for (plant) pathogens and/or the inert core does not contain any (plant) pathogen and/or the inert cores in a particular batch have a certain extent of uniformity and/or the inert core must not be able to have a chemical interaction with the active ingredient or the seed (or seedling or plant(part)). The needed degree of uniformity depends on the to be produced pellet. In case of, for example, an active ingredient-containing pellet as shown in Figure 1, the core must have a high degree of uniformity, preferably above 90% and even more preferably above 95%. In case of an active ingredient-containing pellet as shown, for example, in Figures 2-4, the uniformity of the core is of less importance, because the uniformity will be increased upon pelleting.

In a preferred embodiment, the inert core is a round structure of uniform size, but other shapes and structures with uniform size distribution are also used. An example is a glass bead with a diameter of 1 to 2 mm. However depending on the application (for example on the size of the seeds with which the active-ingredient-containing pellet will be used) also smaller beads (e.g. tobacco pellet) can be used or larger cores. In a more preferred embodiment, the inert core is porous.

The active-ingredient-containing pellet comprises at least one active ingredient. Examples are already mentioned above and include acaricides or miticides, bactericides, fungicides (e.g. Apron, Maxim, Thiram), herbicides, insecticides (e.g. Rovral® (Bayer), Gigant®, Tracer® (DowElanco), Gaucho®, Poncho®, Calypso® (Bayer), Cruiser® (Syngenta) Oncol® (Otsuka Chemical), Mundial®, Regent® (BASF), Birlane® (Cyanamid) etc.), molluscicides, nematicides (Avicta® (Syngenta), bird repellents, ant repellents and rodenticides, but also growth hormones, nutrients (micro and/or macro), germination stimulants, micro organisms, pheromones, biological preparations, plant metabolic regulator, plant strengtheners, gene inducers etc.

The active ingredient in an active ingredient-containing pellet may be evenly distributed in said pellet or it may be confined to a certain layer or it may be present on the outside of said pellet. In case of an active ingredient that is phytotoxic to a plant seed or a young seedling, the corresponding active ingredient pellet preferably comprises an outer coating layer which prevents direct contact of the active ingredient with the plant or young plant seedling.

In a preferred embodiment, the active ingredient present on or in the active ingredient-containing pellet is in a certain concentration detrimental for the seed or incompatible with an ingredient present on a seed-containing pellet or the active ingredient is desiccation intolerant or the active ingredient is instable during storage or the release of active ingredient is too short when present on or in a seed-containing pellet.

It is clear to the skilled person that an active ingredient-containing pellet can also comprise two or more active ingredients (for example three, four or five). Preferably, the ingredients are chosen such that they are compatible with each other.

In a preferred embodiment, an active ingredient-containing pellet comprises inert core and at least one active ingredient, wherein said active ingredient is advantageous for a plant seed or a plant and wherein said active ingredient is phytotoxic in the effective amount for a plant seed. In such a case, part of the seed-phytotoxic active ingredient is applied on or in an active ingredient-containing pellet and part of said ingredient is applied on a seed-containing pellet. In such a case the concentration of seed-phytotoxic active ingredient on the seed-containing pellet is chosen such that the phytotoxic effect is not present. The necessary effective amount of active ingredient is obtained by the combined presence of active-ingredient on one or multiple active ingredient-containing pellet(s) and on one or multiple seed-containing pellet(s).

It is also possible to split the effective amount of active ingredient over the seed-containing pellet and the active ingredient-containing pellet because of specific availability of the active ingredient. The active ingredient in the active ingredient-containing pellet can be released (for example controlled or delayed) in such a way (for example weeks after planting) which is not possible when the active ingredient is only applied in a seed-containing pellet.

In yet another embodiment, an active ingredient-containing pellet comprising a biodegradable core and at least one active ingredient is used, wherein said active ingredient is advantageous for a plant seed or a plant.

A biodegradable core is a core which in time is at least partly and preferably completely degraded, for example by the action of soil bacteria. Examples of a biodegradable core are a core of nitrogen (for example KNO₃) or an alginate bead or a PLAGA core. In a preferred embodiment such a biodegradable core is a round structure, preferably of a uniform size and even more preferably such a core is porous. The desired degree of uniformity of such a biodegradable core is for example dependent on the type of the to be prepared dummy pellet (see Figures 1 to 4).

A person skilled in the art is very well aware of methods for preparing an active ingredient-containing pellet with standard know technology like film coating on rotostat equipment or in pan coat equipment or fluidbed systems with polymer systems such as starch, poly saccharid.es, polyvinyl alcohols, acetates, acrylates, polyurethanes etc. The active ingredient containing pellet can be prepared with commonly known seed pelleting technologies with filler material commonly used in the seed coating business such as, for example, clay, perlite, diatomaceous earth, quartz, cellulose, vermiculite, mica, etc.

Preparation of an active ingredient-containing pellet typically comprises coating of the used core (for example an inert core or a biodegradable core such as a KNO₃ core) with a suitable coating composition and subsequently providing at least one active ingredient to said coated core by spraying said active ingredient on said coated core or by providing said coated core with a subsequent coating that comprises at least one active ingredient. If desired, the coating layer comprising said active ingredient can be preceded by one or more other coating layers. However, it is also possible to apply the at least one active ingredient in the first coating layer or to apply/spray at least one active ingredient directly to/on said core.

In a preferred embodiment, the invention uses an active ingredient-containing pellet that allows precision sowing. It is getting more and more important in the agriculture to provide an active ingredient in a very precise amount, because providing too much active ingredient will unnecessary burden the environment and using not enough active-ingredient will result in loss of crop. The disclosure allows such a precision sowing by applying the correct amount of active ingredient.

According to the invention a seed containing-pellet comprises a seed, a coating and at least one active ingredient, which active ingredient is present in an amount of 0.1-50 % preferably 0.1-25 % or even more preferably 0.1-10 % of the total effective amount, the remaining amount being present on or in the active ingredient-containing pellet. In a preferred embodiment, said active ingredient is capable of at least in part inhibiting insect-pest. In a preferred embodiment, said active ingredient is an insecticide.

The invention can be used for different purposes, one of them being the use of fungicides to combat seed-borne disease pathogens and one of the other purposes is the use of an active ingredient which in its total effective amount needed is phytotoxic but which at lower concentrations is tolerated by the seed (for example an insecticide).

In respect of fungicides used to combat (at least in part) seed-borne disease pathogens it is noted that this is a particular advantageous embodiment, because seed-borne disease are now directly encountered and now the seeds do not have to be disinfected. For example, tomato seeds must be disinfected before they are being coated/pelleted. All crops that are sown directly into the field, for example onion, carrot, corn, sugar beets, sweet corn, wheat etc need fungicides to protect the seedling against seed born diseases. Examples of fungicides that can be used for this purpose are Thiram or Fludioxinyl, Captan, Maneb, Carboxin and PCNB. The fungicide can be present in an amount of 1-100 % preferably 50-100 % or even more preferably 100 % of the total effective amount.

In case of (almost all) insecticides the seed does tolerate a certain amount of said active ingredient without compromising the germination efficacy, but said seed does not tolerate the total amount needed to provide the desired effect of said active ingredient. In such a case the total amount of active ingredient is divided over a seed-containing pellet and (at least one) active ingredient-containing pellet. Examples are Trigard (active ingredient cyromazine) on onions to combat onion maggots (onion fly) or Mundial (active ingredient fipronil) on Brassica to combat pests like cabbage fly or Force (active ingredient teflutrine) on onion. Even a nematicide like Avicta (active ingredient abamectine) can be used in this way to combat root nematodes on tomato and pepper roots. Such an insecticide or such a nematicide is present on or in a seed-containing pellet in an amount of 0.1-50 %, preferably 0.1-25_% or even more preferably 0.1-10 % of the total effective amount. The remaining amount is present on or in an active-ingredient-containing pellet.

At least the seed-containing pellet and optionally the active ingredient-containing pellet is further provided with at least one component capable of regulating the release of said at least one active ingredient. Such a component is used to release at least one active ingredient at a desired time point. Different active ingredients may call for a different release time. For example, if at least one of the active ingredients is a micronutrient that is needed for or improves flower- and/or seed development such an active component is preferably released from the active ingredient-containing pellet at a time point late in the development of the corresponding plant. Or if the active ingredient is a macronutrient such as phosphate, this is preferably released at the beginning of the plant growth/development. The choice of release of a pesticide largely depends on the type of pest or disease that needs to be encountered. If the pest is active in the early stages of plant growth, the pesticide is preferably released at an early time point and if the pest is active in later stages of plant growth, the pesticide is preferably released at a later time point.

The skilled person is aware of the fact that different types of release patterns can be obtained by using the appropriate components. Release patterns such as a burst or a delayed or a slow or a controlled or a sustained or an extended release are feasible.
The different release patterns are typically defined as follows
- lag burst is defined as initially little or no release followed in time by a sudden strong release over a short time period
- delayed or sustained is defined as showing a release pattern like not-delayed but the start of the release is postponed
- slow is defined as from the start a very gradual release, typically over a long time period
- controlled is defined as release which is manipulated according to desired levels over a desired time period

Examples in respect of different release patterns are provided herein within the experimental part. Preferably the release is such that the active ingredient is released at a time point at which a seed or a plant is in need of said active ingredient.

The released active ingredient may originate from the core (in case of for example a porous (inert) core) or from the coating around said core. Moreover, according to the invention more than one (for example 2 or 3) active ingredients are present on an active-ingredient-containing pellet or on a seed-containing pellet, and said active ingredients are coated/pelleted on said pellets in different layers with different release patterns. For example, an active ingredient-containing pellet comprising at least 2 pesticides, one of the pesticides is needed during seed germination and the second one three weeks later after development of a plant. The pellet then comprises at least two release layers: one which releases the first pesticide during germination followed by seedling establishment and the other one releases the second pesticide approximately 3 weeks later. It is clear to a skilled person that the same effect is also obtained by providing two separate active ingredient-containing pellets, each one with its one active ingredient and it's own release pattern.

Moreover, the release of a pesticide may be curative or precautionary. In case of a precautionary release, the active ingredient is released without knowing whether this is absolutely necessary (i.e. without knowing whether a disease is present) and in case of a curative release, the presence of a disease is highly likely or confirmed. Also for other active ingredients (for example a nutrient) the release may be curative or precautionary.

It is clear to the skilled person that a component used to establish a certain release pattern is carefully selected not only in respect of the appropriate component but also in respect of the concentration as well as in respect of layer thickness. Components used can be from the groups: ethyl acrylate copolymers (Eudragit, Degussa), poly-urethanes, polyvinylacetates polymers and copolymers, poly lactic acids, poly acrylamide-based polymers, hydrogels made by essential anhydrous polymerisation reaction etc.

The release coatings are provided on a pellet with standard coating/pelleting techniques which are already mentioned above.

Besides the fact that a seed-containing pellet, and optionally active ingredient-containing pellet, is provided with a component that regulates the release of at least one active ingredient, the invention further provides a seed-containing pellet or active ingredient-containing pellet which has further been provided with at least one type of super-absorbent-polymer (SAP). Examples of a SAP are sodium polyacrylates, potassiumpolyacrylates, crosslinked poly acrylates, modified cellulose esthers and starchcrafted cross-linked poly acrylates. Although seed coating and/or pelleting techniques are normally performed in an aqueous solution it is also possible to coat/pellet seeds based on methods that involve the used of solvents.

As already described above, the at least one active ingredient used on or in an active-ingredient or seed containing pellet of the invention is for example at least one nutrient (micro or macro). As described herein within the experimental part, said nutrient may be (part of) the core or may be arranged around a core (for example an inert or dead seed core), optionally in a coating layer. Smarts comprising at least one nutrient are further referred to as Nutri-Smarts. The combination of a nutrient as a core and at least one (preferably two) nutrients arranged around a dead seed or inert core provides very good results.

Smarts provided with more than one active ingredient are called Multi-Smarts.

The use of Nutri-Smarts increases the flexibility of the plant grower. If (potting) soil is unfertilized or does not comprise enough fertilizers/nutrients, a plant grower can use a particular Nutri-Smart and introduce a very well known amount of a nutrient as well as for example one or two specific nutrients. The burden on the environment induced by the presence of a particular nutrient can thus be decreased. Moreover, a Nutri-Smart can be placed close to a seed or plant, so that a nutrient can easily be taken up by said seed or plant.

In case it is necessary to disinfect seeds before subjecting them to a coating/pelleting method, such disinfection can be carried out by methods known by the skilled person, such as chemical or biological disinfection or hot water treatment or steam treatments.

Although an active ingredient-containing pellet is combined together with a seed-containing pellet, it is also disclosed that an active-ingredient-containing pellet may also used together with a plant part such as a potato tuber, flower bulb or with a plant cutting or with a true seed or with a rootstock. Moreover, an active ingredient-containing pellet may also be used when a plant is transferred from one growing medium to another growing medium (for example from soil type a to soil type b).

Also disclosed is a method for improving the germination of a seed-containing pellet, comprising applying 1 to 10 active ingredient-containing pellets with at least one seed-containing pellet to soil. Also disclosed is a method for improving the germination of a seed-containing pellet, comprising applying at least one active ingredient-containing pellet with at least 1 to 10 seed containing pellets. Instead of a method for improving the germination of a seed-containing pellet, such a method is also used to improve the germination of a true seed or to improve the growth of a rootstock or a tuber or a flower bulb or a plant cutting. In view of the earlier made remarks it is clear that such methods can also be used to improve the growth of a plant. In such a case one plant is provided with 1 or multiple active ingredient-containing pellets for example by putting said pellets in the soil with the plant.

Preferably said seed-containing pellet is a multiseed. Such a multiseed may be composed of a couple of seeds that form one clump of seeds or such a multiseed may comprise a couple of seeds arranged around for example an inert core or a couple of smaller seeds arranged around a larger (killed) seed.

If more than one active ingredient-containing pellet is used per seed-containing pellet the active ingredient-containing pellets may be identical or different (for example different in the amount of a particular pesticide or different in the kind of active ingredient, for example, one pellet comprising a pesticide and another comprising a hormone etc). Another example wherein one would use different active ingredient-containing pellets is if for example two active ingredients are incompatible (and can thus not be present on one and the same pellet) or if different release patterns are desired.

One of the advantageous of these methods is a large amount of flexibility. For example the choice for the amount of active ingredient-containing pellets is made on the actual pest pressure; pelleted seeds are prepared in advance and dependent on the actual pest pressure it is decided how many pesticide-containing pellets are applied Also disclosed is a method wherein at least part of the active-ingredient-containing pellets is applied after applying a seed-containing pellet or wherein an active-ingredient-containing pellet is applied on top of the soil. This again introduces a lot of flexibility because an active-ingredient-containing pellet can be applied simultaneous with the seed-containing pellet as well as prior to sowing or after sowing of the seed-containing pellet. Moreover, depending on the desired use of the active-ingredient-containing pellet it may be placed in the soil as well as on top of the soil. For example, an active-ingredient-containing pellet comprising as an active ingredient a snail or bird repellent is placed on top of a field. Preferably, such an active-ingredient-containing pellet has the appearance of a seed pellet.

The invention will now be elucidated with reference to a number of nonlimiting examples which illustrate various aspects of the disclosure. Examples 1-3 have also been disclosed in WO 01/13722 A1.

### Experimental part

### Example 1

One million lettuce seeds (lactuca sativa) in a batch weighing 1,10 gram per 1 thousand grains were killed by means of gamma-rays (40 kGy). The batch was pelleted according to the standard procedure, using a standard 100 cm diameter pelleting-pan (Vingerlings Machinefabriek b.v., Rotterdam, Netherlands).

This process entailed the alternating addition of coating material (C-l, Incotec) and binding solution (Sol-1, Incotec) providing pellets having a uniform shape and size (3.25-3.5 mm slot screen).

Then the pellets were dried for 1.5 hours at 40°C. In a fume-cupboard, at room temperature, 2000 ml of a commercial coating-formulation (Disco Color Red L083) was mixed with 1143 g of insecticide powder Gaucho 70 WS® (Bayer) and 2660 ml water. The batch of 1 million dried pellets was processed in a Pancoater (Ramacota 36) of a diameter of 36 inches according to the standard process.

This process entailed that during the entire process (12 0 min.) the coating-mixture was evenly and slowly distributed over the pellets while continuously drying (drying temperature = 55°C), resulting in the pellets as described in Figure 2. The insecticide is comprised in the thin film of coating on the outside of the pellet.

The above-mentioned pellets have a recovery of 98% (recovery measurements done by a HPLC) of the active ingredient imidacloprid, the active component (a.c.) of the Gaucho-formulation, measuring a distribution coefficient of variation of 10%.

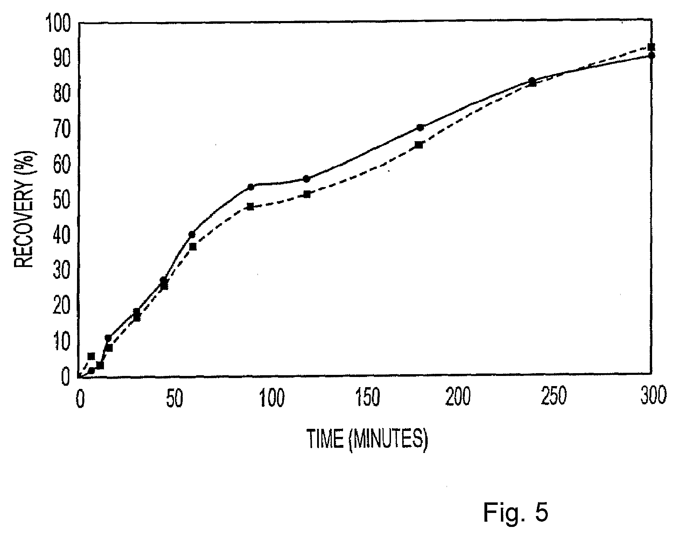

The insecticide is released into the water from the produced Gaucho-pellets (800 g a.c./million pills) in the same way as from the pellets comprising both the seed and the Gaucho (800 gram a.c./million pellets) in the same pellet (see Figure 5),

Figure 5 shows the release into water of the active component from a viable seed-containing pellet according to the prior art (solid line) and from the produced Gaucho-pellet (dotted line). Plotted are the recovery in % against time (minutes).

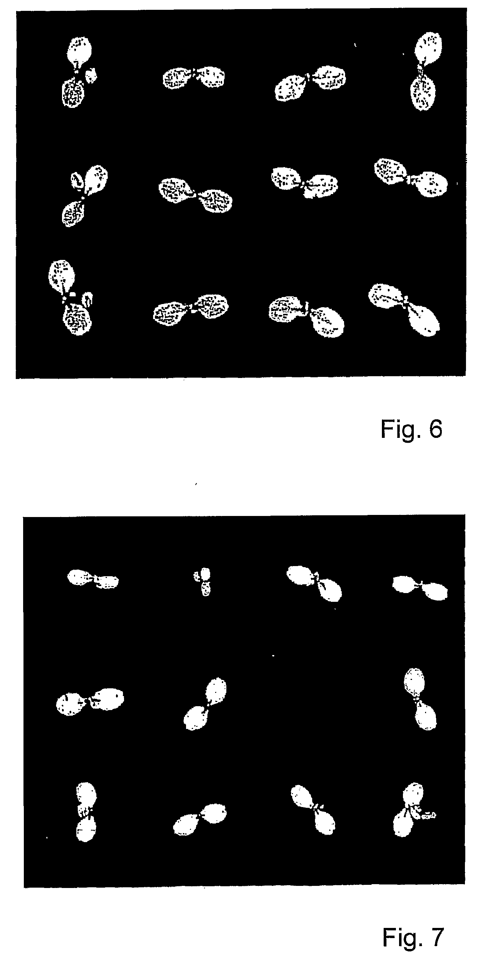

The seed-containing pellets and the Gaucho-containing pellets (800 gram a.c./million pellets) sown as separate pills (Fig.6) germinate more evenly than the pellets that contain both live seed and Gaucho (800 g a. c./million pellets) in one pellet (see Fig. 7) .

The above example is also applicable to other seed species, such as: Tobacco (Nicotiana tabacum) in the pellet size 1.75-2.00 mm with a dosis of 200 g imidacloprid/million pellets. Sugar beet (Beta Vulgaris) in the pellet size 3.75-4.50 mm with a dosis of 900 g imidacloprid/million pellets.

### Example 2

From a batch of three million glass-beads pellets were produced according to the standard procedure. The batch was processed in a pelleting pan with a diameter of 100 cm (Vingerlings Machinefabriek b.v., Rotterdam, Netherlands). In this method the coating material (C-22, Incotec) and binding solution (Sol-1, Incotec) were added alternately in order to produce pellets of homogeneous size and shape (1.50-1.75 mm slot screen).

Subsequently, the pellets were dried at 60°C for 45 minutes. In a fume-cupboard at room temperature 31.5 ml of a commercial coating formulation (Disco Color Red L083, Incotec) was mixed with 18.0 gram of insecticide powder Gaucho 70 WS® Bayer) en 10.4 ml of water. A batch of 90.000 dry pellets was placed in a 'Rotostat coating machine' with a diameter of 30 cm (Marline, Norfolk, England). The mixture of insecticide and coating formulation was applied by means of the standard 'spinning disc' (6 cm diameter). After 3 minutes process time, the mixture was distributed evenly over the pellets and the pellets were transferred to a standard pelleting pan. Alternately, finishing-material (F-13, Incotec) and binding solution (Sol-1, Incotec) were added in order to produce pellets of homogeneous size and shape (2.00-2.25 mm slot screen).

Then, the pellets were dried at a temperature of 60°C for 45 minutes resulting in pellets as described in Figure 4.

### Example 3

In a fume cupboard at room temperature, 345 g of a commercial coating formulation (Disco L126, Incotec) is mixed with 107 g insecticide formulation Gigant 480FS (DowElanco) and 11.5 g fungicide solution Rovral Aquaflo (Bayer). A batch of 1495 gram cauliflower seeds (Brassica oleracea) with a seed-fraction of 1.50-1.75 mmR was killed by means of microwave (300W, 45 min., Samsung M935). The batch was processed according to the standard procedure in a Pancoater (Ramacota-18) with an 18 inch diameter. This procedure entailed that during the entire process the coating formulation was slowly distributed over the seeds by means of an air spray gun while continuously drying (drying temperature = 55°C) resulting in film-coated seeds as described in Figure 1. The insecticide is comprised in the thin layer of film coating on the outside of the 'dead' seed.

### Example 4

We have produced smart pellets of dead Brassica seeds with 200 gram Gaucho 70WS (Bayer) per 100.000 pellets with standard seed coating equipment. These Brassica smart pellets have been film coated with several layers of a polymer system based on polylactic acids provided by Croda Bowmans Chemicals LtD. These smart pellets are tested in field trials by an experimental station (see example 5).

This experiment is designed to give some insight whether it is possible to control the release of imidacloprid with polylactic acid polymers. Moreover, will lag burst release of imidacloprid improve the control of trips in white cabbage?

The seeds were pelleted on a rotary coater. Rate of active ingredient is 140 g a.c./100.000 seeds.

The release of all smart pellet types is measured in water and during the plant raising stages by obtaining a sample from each smart pellet type. The field trials are performed by an experimental station (example 5).

| Object no | | | Amount of polymer |
|---|---|---|---|
| 81.13998.6001 | Control smart pellet | | |
| 81.13998.6002 | Smart pellet A | Thin layer | 1.42 mg/pellet |
| 81.13998.6003 | Smart pellet B | Medium layer | 1.94 mg/pellet |
| 81.13998.6004 | Smart pellet C | Thick layer | 2.69 mg/pellet |

The thickness of the layer is defined as the amount of polymer/pellet.

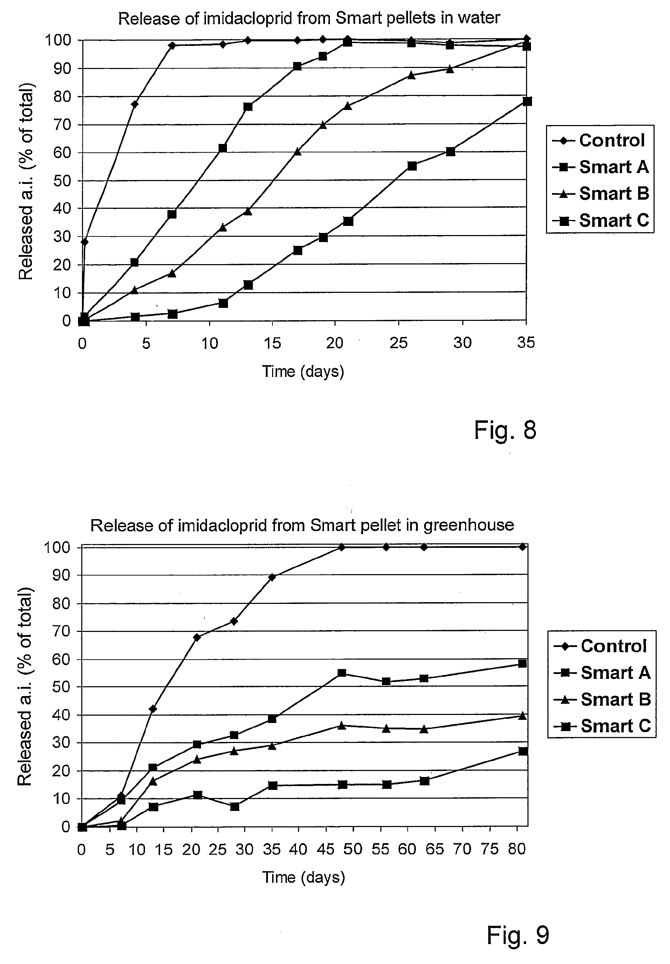

Figure 8 discloses the release of imidacloprid from the dummy in water.

Figure 9 discloses the release of imidacloprid from the dummy in the greenhouse at the plant raiser (first 4 weeks) followed by the release in the field.

It is clear from Figure 8 and 9 that the release of imidacloprid from the dummy pellets is slowed down with the used coating. With this technology it is feasible to release active ingredient during the complete growing season

This experiment was repeated and analogous results were obtained in the repetition.

### Example 5

The efficacy of the imidacloprid pellets prepared in example 4 have been tested on their effect on the control of thrips in white cabbage.

The following object were tested and compared:

| code | object | Dose of Gaucho (rate of active ingredient) |
|---|---|---|
| 1 | control | - |
| 2 | Gaucho seedcoating | 2 g /1000 plants (140 g a.i. / 100.000 seeds) |
| 3 | control + Gaucho dummy | 2 g / 1000 plants (140 g a.i. / 100.000 seeds) |
| 4 | control + slow release type A | 2 g / 1000 plants (140 g a.i. / 100.000 seeds) |
| 5 | control + slow release type B | 2 g / 1000 plants (140 g a.i. / 100.000 seeds) |
| 6 | control + slow release type C | 2 g / 1000 plants (140 g a.i. / 100.000 seeds) |

**Trial set up**

| | |
|---|---|
| Trial locatie | Experimental station |
| Cultivar | thrips sensitive variety |
| Sowing date | 20 april 2005 |
| Planting date | 1 juni 2005 |
| Previous crop | Grass |
| (% lutum) | (20) |
| % organic matter | 5,9 |
| Fertilizer kg/ha | 270 kg N als KAS |
| reps | 4 |
| Herbicide use | Butisan S 2 l/ha and Centium CS 0,2 l/ha on 6 juni 2005 |
| yield | 7 november 2005 |

| treatments | Number of thrips per 5 heads | | | | | |
|---|---|---|---|---|---|---|
| | 27 July | 9 August | 24 August | 9 Sept. | 23 Sept. | 13 Oct. |
| 1 untreated | 5,0 | 1,3 | 1,3 | 19,3c | 16,8 | 18,3 |
| 2 Gaucho | 5,3 | 1,5 | 0,8 | 12,5b | 15,3 | 19,8 |
| 3 Gaucho dummy | 4,3 | 0,5 | 0,0 | 9, 5ab | 8,5 | 16,0 |
| 4 slow release A | 4,8 | 0,5 | 0,5 | 11,3ab | 14,0 | 25,0 |
| 5 slow release B | 3,0 | 0,3 | 0,5 | 13,8b | 8,0 | 17,0 |
| 6 slow release C | 3,8 | 1,8 | 1,5 | 7,0a | 9,0 | 12,5 |
| P- | 0,916 | 0,665 | 0,578 | 0,004 | 0,268 | 0,805 |
| Lsd | 4,8 | 2,3 | 1,9 | 5,3 | 9,7 | 18,7 |

Unfortunately, the pest pressure was (due to the weather) extremely low. The control without any pesticide had only 18 thrips per head at the end of the season, whereas in example 6 which had a better pest pressure the control head contained 48 thrips per head.

### Example 6

In another experiment with the control of thrips in white cabbage, it was demonstrated that the use of more then one active-ingredient-containing pellet per one seed-containing pellet results in better control of pests. Moreover, this experiment also revealed the efficacy of one active-ingredient-containing pellet per seed-containing pellet. The setup of this trial was equal as described in example 5.

The table gives the results of this trial. The control in this trial had 48 thrips per head whereas the control of example 5 only had 18.

| | Imadcloprid per plant | Number of thrips per 5 heads | | | |
|---|---|---|---|---|---|
| treatment | | 13-July | 8-August | 7-Sep. | 13-Oct. |
| control | 0 mg | 1 | 0,3 | 16 | 48 |
| Seed treatment | 1,4 mg | 0 | 0 | 11 | 23 |
| Active in seed containing pellet | | | | | |
| one smart pellet | 1,4 mg | 0 | 0 | 8 | 14 |
| two smart pellets | 2,8 mg | 0,5 | 0 | 11 | 4 |
| Soil drench | 3,5 mg | 0 | 0 | 7 | 5 |

The data of this trial clearly show that already one smart pellet results in lower pest occurrence. The control of the pest could even be increased by using two smart pellets per plant. The rate of active ingredient was raised from 1.4 to 2.8 mg per plant which is still lower that the allowed soil drench application of 3.5 mg/plant, but the protection is similar.

### Example 7

In yet another experiment, SMART pellets were produced with different insecticides. In the same experiment, so-called Nutri-Smarts were produced. The invention provides different kinds of Nutri-Smarts, for example a Nutri-Smart comprising at least one nutrient as a core, said Nutri-Smart is further provided with another active ingredient, for example a pesticide another nutrient or a combination thereof. Also disclosed is a Nutri-Smart that comprises a dead seed as a core or an inert core and wherein said Nutri-Smart further comprises at least one nutrient. This example provides the next Nutri-Smarts:
- A Nutri-Smart preferably has a biodegradable core, for example a KNO₃ core. KNO₃ pellets can be obtained commercially. In this example the KNO₃ cores were first coated and subsequently provided with an active ingredient by spraying said active ingredient on said coated core. However, said active ingredient can also be added to the coating layer or in or on any other further coating layer. The active ingredient can also be directly applied to the core.
- Also disclosed is a Nutri-Smart that comprises a dead seed as a core and is coated with at least one nutrient. The latter described Nutri-Smart can be provided with at least two nutrients.

This experiment further describes results obtained with endive as well as with flowers.

| Object no | | | | |
|---|---|---|---|---|
| **SMART^{ⓒ}** | **core** | **active ingredient** | **nutrient** | **amount of active ingredient (a.i.) or nutrient per pellet** |
| 81.14682.6001 | dead lettuce seed | fipronil | none | 0.04 mg ai |
| 81.14682.6002 | dead lettuce seed | imidacloprid | none | 0.4 mg ai |
| 81.14682.6003 | dead lettuce seed | thiametoxam | none | 0.67 mg ai |
| | | | | |

| **Nutri-SMART** | **core** | **active ingredient** | | |
|---|---|---|---|---|
| 81.14682.6005 | KNO3 | Fipronil | nitrate | 0.04 mg ai 40 mg KNO3 |
| 81.14682.6006 | KNO3 | Imidacloprid | nitrate | 0.4 mg ai 40 mg KNO3 |
| 81.14682.6007 | KNO3 | Thiametoxam | nitrate | 0.67 mg ai 40 mg KNO3 |
| 81.14682.6009 | KNO3 | | | 40 mg KNO3 |
| 81.14682.6010 | dead endive seed | | seeweed extract polyphosphate | 1 mg seaweed 10 mg polyphosphate |

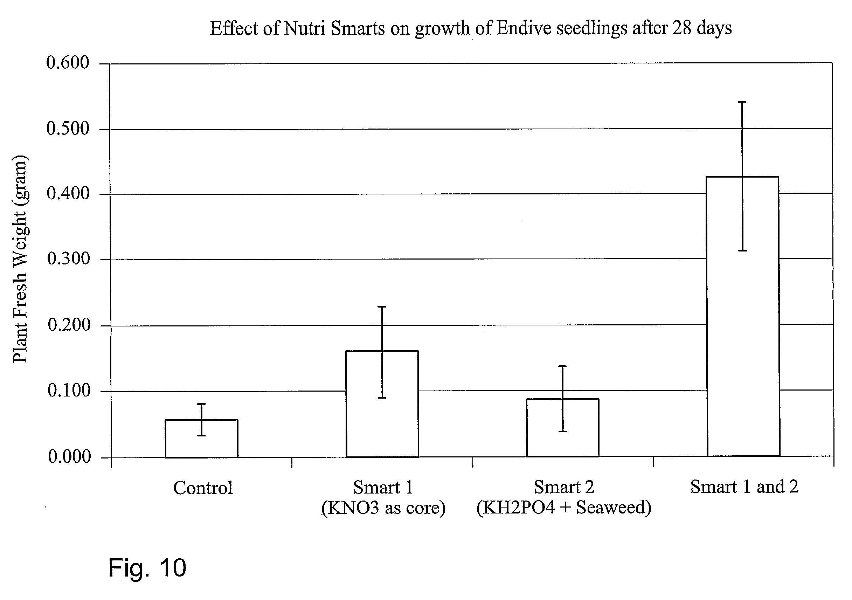

To test the effect of the produced different Nutri-Smarts, an endive lot was grown on potting soil without fertilizer for four weeks in the 16°C greenhouse. Figure 10 discloses the effect of Nutri Smarts on the growth (measured as fresh plant weight) of endive seedlings in greenhouse conditions for 28 days on non fertilized potting soil. Figure 10 shows the effect of Nutri-Smarts on the growth of endive seedlings on unfertilized soil measured as mean fresh weight per plant. Surprisingly, the combination of a Nutri-Smart with KNO3 as a core and a Nutri-Smart with seeweed and potassium phosphate on an inert or dead seed core gave outstanding results.

The Smart pellets of this example were tested in a disease assay setting. The three different insecticide SMARTs were applied to two different flower crops to test the control of trips and aphids.

Imidacloprid shows the best results in the aphid control whereas all three insecticides control the trips.

| Table 1 | pesticide | Number of trips on 15 stems of Callistephus (35 d after sowing) | Number of aphids on Celosia per block 64 days after treatment |
|---|---|---|---|
| Control | | 58 | 5000 |
| | | | |
| SMART^{ⓒ} | fipronil | 29 | 5700 |
| SMART^{©} | imidacloprid | 25 | 400 |
| SMART^{©} | thiametoxam | 26 | 1300 |

### Example 8

This example provides results obtained with endive seeds combined with Smart pellets comprising a dead endive seed as a core and with at least one or two (a so-called Multi-Smart) active ingredient(s) or combined with a Nutri-Smart with a KNO3 core, said Nutri-Smart is further provided with at least one pesticide and/or at least one nutrient. This example furthermore shows the effect of dividing the active ingredient over a seed pellet and a Smart pellet.

| **number** | **type of seed/core/Smart** | **Active ingredient** | **dosage** | **remark** |
|---|---|---|---|---|
| | | | | |
| 81.14705.6001 | seed | none | | control |
| 81.14705.6002 | seed | imidacloprid (Gaucho 70WS) | 11.4 g/U | = 10% |
| 81.14705.6003 | seed | imidacloprid (Gaucho 70WS) | 114 g/U | = 100% |
| | | | | |
| 81.14705.6004 | dead seed (Smart) | imidacloprid (Gaucho 70WS) | 103 g/U | = 90% |
| 81.14705.6005 | dead seed (Smart) | imidacloprid (Gaucho 70WS) | 114 g/U | = 100% |
| 81.14705.6006 | dead seed (Smart) | imidacloprid (Gaucho 70WS) methiocarb | 114 g/U 80 g/U | = 100% = 100% |
| | | | | |
| 81.14705.6007 | KNO3 as a core | imidacloprid 600FS | 83 g/U | = 50% |
| 81.14705.6008 | Dead seed | imidacloprid 600FS | 83 gr/U | = 50% + seeweed and polyphosphate |

The annotations 70WS and 600FS refer to the used imidacloprid formulations.
Methiocarb is a snail repellent

These seeds were tested as outlined in the following Table:

| **number** | **Crop** | **object** | **Seeding** | **remark** |
|---|---|---|---|---|
| 1 | endive | 6001 | | control |
| 2 | endive | 6003 | | Sanokote (Gaucho) |
| | | | | |
| 3 | endive | 6001 + 6005 | Same time | |
| 4 | endive | 6002 + 6004 | Same time | |
| 5 | endive | 6001 + 6007 + 6008 | Same time | 1 seed and 2 SMART pellets |
| 6 | endive | 6001 + 6006 | Same time | |
| | | | | |
| 7 | endive | 6001 + 6005 | Sow smart at planting time | example of post-dummy |
| 8 | endive | 6002 + 6004 | Sow smart at planting time | example of post-dummy |
| | | | | |
| 9 | Baby leaf (lettuce) | Naked seed | 4 seed per block | control 4 seeds and 1 SMART pellet |
| 10 | Baby leaf (lettuce) | Naked seed + 6005 | 4 seed per block | 4 seeds and 1 SMART pellet |

The following results were obtained:

| **number** | **Crop** | **object** | | **Number of aphids after 8 weeks** |
|---|---|---|---|---|
| 1 | endive | control | | 231 |
| 2 | endive | Sanokote | | 40 |
| 3 | endive | Smart Gaucho (100%) | | 116 |
| | | | | |
| 4 | endive | Sanokote (10%) + Smart (90%) | | 70 |
| 5 | endive | Smart imidacloprid 600FS (50%) + Nutri Smart imidacloprid 600FS (50%) | | 60 |
| 6 | endive | Multi Smart Gaucho + methiocarb | | 133 |
| | | | | |
| 7 | endive | As 3 but at planting time | | 89 |
| 8 | endive | As 4 but smart applied at planting | | 55 |
| | | | | |
| 9 | Baby leaf | 4 Naked seed | | 206 |
| 10 | Baby leaf | 4 Naked seeds + 1 smart Gaucho | | 88 |

The endive treatments show that splitting the active over the seed and the smart seemed to give a bit better control than when the active is only applied on the smart. With the multi smart we were not able to show the effect of methiocarb on the control of molusks because the summer was to dry. With the baby leaf lettuce we demonstrated that smart technology can also be successful when one smart is applied with more than one seed (4 in this case), even though the active ingredient on said Smart was in principle only sufficient for one seed.

## Claims

1. An active ingredient-containing pellet in combination with a seed-containing pellet, said seed-containing pellet comprising a seed, a coating and at least one active ingredient, which active ingredient is present in an amount of 0.1-50 % of the total effective amount, the remaining amount being present on or in the active ingredient-containing pellet,
and wherein the seed-containing pellet further comprises at least one component capable of regulating the release of said at least one active ingredient, wherein said active ingredient-containing pellet or seed-containing pellet comprises more than one active ingredient, and the more than one active ingredients are either coated or pelleted on said pellet in different layers with different release patterns.

2. An active ingredient-containing pellet in combination with a seed-containing pellet according to claim 1, wherein the active ingredient is present in an amount of 0.1-25 % of the total effective amount, the remaining amount being present on or in the active ingredient-containing pellet.

3. An active ingredient-containing pellet in combination with a seed-containing pellet according to claim 1 or 2, wherein the active ingredient is present in an amount of 0.1-10 % of the total effective amount, the remaining amount being present on or in the active ingredient-containing pellet.

4. An active ingredient-containing pellet in combination with a seed-containing pellet according to any one of claims 1-3, wherein the active ingredient-containing pellet comprises an inert core and at least one active ingredient, wherein said active ingredient is advantageous for a plant seed or a plant.

5. An active ingredient-containing pellet in combination with a seed-containing pellet according to claim 4, wherein at least one of said active ingredients is phytotoxic for a plant seed.

6. An active ingredient-containing pellet in combination with a seed-containing pellet according to any one of claims 1-3, wherein the active ingredient-containing pellet comprises a biodegradable core and at least one active ingredient, wherein said active ingredient is advantageous for a plant seed or a plant.

7. An active ingredient-containing pellet in combination with a seed-containing pellet according to any one of claims 1-3, wherein an active ingredient comprised in the seed-containing pellet is an insecticide.

## Patentansprüche

1. Pellet, enthaltend einen aktiven Wirkstoff, in Kombination mit einem Saatgut enthaltenden Pellet, das Saatgut enthaltende Pellet umfassend ein Saatgut, eine Beschichtung und mindestens einen aktiven Wirkstoff, wobei der aktive Wirkstoff in einer Menge von 0,1-50 % der gesamten wirksamen Menge vorhanden ist, wobei die Restmenge auf oder in dem aktiven Wirkstoff enthaltenden Pellet vorhanden ist,
und wobei das Saatgut enthaltende Pellet ferner mindestens eine Komponente umfasst, die in der Lage ist, die Freisetzung des mindestens einen aktiven Wirkstoffs zu regulieren, wobei das Pellet, enthaltend einen aktiven Wirkstoff oder das Saatgut enthaltende Pellet mehr als einen aktiven Wirkstoff umfasst und die mehr als ein aktiven Wirkstoffe auf das Pellet in verschiedenen Schichten mit verschiedenen Freisetzungsmustern entweder beschichtet oder pelletiert sind.

2. Pellet, enthaltend einen aktiven Wirkstoff, in Kombination mit einem Saatgut enthaltenden Pellet nach Anspruch 1, wobei der aktive Wirkstoff in einer Menge von 0,1-25 % der gesamten wirksamen Menge vorhanden ist, während die Restmenge auf oder in dem den aktiven Wirkstoff enthaltenden Pellet vorhanden ist.

3. Pellet, enthaltend einen aktiven Wirkstoff, in Kombination mit einem Saatgut enthaltenden Pellet nach Anspruch 1 oder 2, wobei der aktive Wirkstoff in einer Menge von 0,1-10 % der gesamten wirksamen Menge vorhanden ist, während die Restmenge auf oder in dem Pellet, das den aktiven Wirkstoff enthält, vorhanden ist.

4. Pellet, enthaltend einen aktiven Wirkstoff, in Kombination mit einem Saatgut enthaltenden Pellet nach einem der Ansprüche 1-3, wobei das Pellet, das den aktiven Wirkstoff enthält, einen inerten Kern und mindestens einen aktiven Wirkstoff umfasst, wobei der aktive Wirkstoff vorteilhaft für einen Pflanzensamen oder eine Pflanze ist.

5. Pellet, enthaltend einen aktiven Wirkstoff, in Kombination mit einem Saatgut enthaltenden Pellet nach Anspruch 4, wobei mindestens einer der aktiven Wirkstoffe phytotoxisch für einen Pflanzensamen ist.

6. Pellet, enthaltend einen aktiven Wirkstoff, in Kombination mit einem Saatgut enthaltenden Pellet nach einem der Ansprüche 1-3, wobei das Pellet, das den aktiven Wirkstoff enthält, einen biologisch abbaubaren Kern und mindestens einen aktiven Wirkstoff umfasst, wobei der aktive Wirkstoff vorteilhaft für einen Pflanzensamen oder eine Pflanze ist.

7. Pellet, enthaltend einen aktiven Wirkstoff, in Kombination mit einem Saatgut enthaltenden Pellet nach einem der Ansprüche 1-3, wobei ein aktiver Wirkstoff, umfasst von dem Saatgut enthaltenden Pellet, ein Insektizid ist.

## Revendications

1. Granule contenant un principe actif en combinaison avec un granule contenant une graine, ledit granule contenant une graine comprenant une graine, un enrobage et au moins un principe actif, lequel principe actif est présent en une quantité de 0,1 à 50 % de la quantité efficace totale, la quantité restante étant présente sur ou dans le granule contenant un principe actif,
et dans lequel le granule contenant une graine comprend en outre au moins un composant capable de réguler la libération dudit ou desdits principes actifs, dans lequel ledit granule contenant un principe actif ou ledit granule contenant une graine comprend plus d'un principe actif, et les principes actifs sont revêtus ou granulés sur ledit granule en différentes couches avec différents schémas de libération.

2. Granule contenant un principe actif en combinaison avec un granule contenant une graine selon la revendication 1, dans lequel le principe actif est présent en une quantité de 0,1 à 25 % de la quantité efficace totale, la quantité restante étant présente sur ou dans le granule contenant un principe actif.

3. Granule contenant un principe actif en combinaison avec un granule contenant une graine selon la revendication 1 ou 2, dans lequel le principe actif est présent en une quantité de 0,1 à 10 % de la quantité efficace totale, la quantité restante étant présente sur ou dans le granule contenant un principe actif.

4. Granule contenant un principe actif en combinaison avec un granule contenant une graine selon l'une quelconque des revendications 1 à 3, dans lequel le granule contenant un principe actif comprend un noyau inerte et au moins un principe actif, ledit principe actif étant avantageux pour une graine de plante ou pour une plante.

5. Granule contenant un principe actif en combinaison avec un granule contenant une graine selon la revendication 4, dans lequel ledit ou lesdits principes actifs sont phytotoxiques pour une graine de plante.

6. Granule contenant un principe actif en combinaison avec un granule contenant une graine selon l'une quelconque des revendications 1 à 3, dans lequel le granule contenant un principe actif comprend un noyau biodégradable et au moins un principe actif, ledit principe actif étant avantageux pour une graine de plante ou pour une plante.

7. Granule contenant un principe actif en combinaison avec un granule contenant une graine selon l'une quelconque des revendications 1 à 3, dans lequel un principe actif compris dans le granule contenant une graine est un insecticide.
